Europäisches Patentamt

European Patent Office

Office européen des brevets

(19)

(11) Publication number: **0 126 594 B1**

# EUROPEAN PATENT SPECIFICATION

(12)

(45) Date of publication of patent specification: **18.12.91**   (51) Int. Cl.⁵: **G11B  7/26**

(21) Application number: **84303176.6**

(22) Date of filing: **10.05.84**

Divisional application 91108307.9 filed on
10/05/84.

(54) Method for manufacturing an optical memory element.

(30) Priority: **13.05.83 JP 84613/83**
**10.01.84 JP 3797/84**

(43) Date of publication of application:
**28.11.84 Bulletin  84/48**

(45) Publication of the grant of the patent:
**18.12.91 Bulletin  91/51**

(84) Designated Contracting States:
**DE FR GB IT**

(56) References cited:
**WO-A- /83460**          **DE-A- 2 031 515**
**DE-A- 2 046 872**     **DE-A- 2 342 285**
**DE-A- 3 229 573**     **DE-B- 2 342 285**
**DE-C- 2 617 914**

(73) Proprietor: **SHARP KABUSHIKI KAISHA**
**22-22 Nagaike-cho Abeno-ku**
**Osaka 545(JP)**

(72) Inventor: **Ohta, Kenji**
**Shiki Mansion 414 89-1, Oaza-Futamata**
**Yao-shi Osaka(JP)**
Inventor: **Hirokane, Junji**
**2613-1 Ichinomoto-cho**
**Tenri-shi Nara-ken(JP)**
Inventor: **Katayama, Hiroyuki**
**Teramoto Heights A101 73, Nimyo-cho**
**Nara-shi Nara-ken(JP)**
Inventor: **Takahashi, Akira**
**9-1-506 Akishinosatsuki-cho**
**Nara-shi Nara-ken(JP)**
Inventor: **Yamaoka, Hideyoshi**
**2-5-21 Amaminishi**
**Matsubara-shi Osaka(JP)**

(74) Representative: **Wright, Peter David John et al**
**R.G.C. Jenkins & Co. 26 Caxton Street**
**London SW1H 0RJ(GB)**

EP 0 126 594 B1

## Description

The present invention relates to a method for manufacturing an optical memory element on which information can be optically recorded.

There has recently been developed an optical memory system which optically stores the information in high density and with mass storage. This optical memory system ensures the high density, mass storage because the information recording unit (bit) is determined by the diameter of the beam which is used in the recording operation and the reading operation. Generally, the bit size is selected to be about 1 μm.

However, in order to ensure such high density, mass storage, the optical beam position must be accurately controlled so that the information is recorded at a predetermined position, and the information is read out from a preselected position.

In the case of an optical memory system of the read-only type, address information can be recorded on the optical memory element at the time of recording of data information. Accordingly, the optical beam position is controllable while the data information is read out from the optical memory element. However, in the optical memory system of the add-on-memory type or the erasable memory type, it is difficult to record the address information on the optical memory element at the time of recording of the data information. Therefore, in such add-on-optical or erasable optical memories, guide signals or guide addresses which are used to control the optical beam position are normally recorded on the optical memory element.

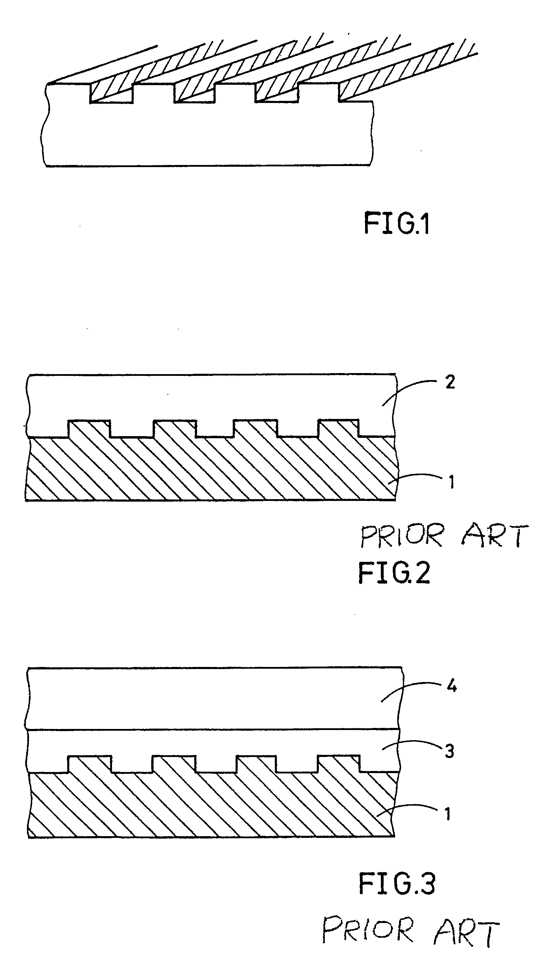

FIGURE 1 schematically shows the general construction of an optical memory element of the add-on-memory type or the erasable memory type. Stripe-shaped grooves are formed on the optical memory element. The information recording operation and the information playback operation are conducted along these stripe-shaped grooves. The stripe-shaped grooves can be intermittently formed so as to bear the bit information representing the address of the groove. Certain methods have been proposed for forming the stripe-shaped grooves on the optical memory element.

FIGURE 2 shows an example of a known method for forming the stripe-shaped grooves on the optical memory element. A nickel (Ni) stamper 1 having the stripe-shaped grooves formed thereon is employed to transcribe the stripe-shaped grooves onto a resin substrate 2 made of, for example, acrylic or polycarbonate, using an injection molding technique.

FIGURE 3 shows another example of the conventional method for forming the stripe-shaped grooves on the optical memory element. Photo-polymer 3 is interposed between the stamper 1, having the stripe-shaped grooves formed thereon, and a substrate 4 made of, for example, glass or acrylic so as to transcribe the stripe-shaped grooves onto the photo-polymer 3 (namely, the 2P method).

Both methods employ a resin layer in the optical memory element. Therefore, there is the possibility that oxygen or moisture will reach the recording material through the resin layer. This will deteriorate the recording material. That is, the convention method does not ensure a stable operation of the optical memory element.

EP-A-0038499 discloses an optical recording disc having a pre-grooved disc-shaped resin base material of acryl or the like, and a recording film formed on the face of the guide grooves, the recording film being of a material which changes in reflectance or transmittance by the application of light. The grooves are formed by a hot press method, or an injection method or the like.

DE-B2-2342285 discloses a method of manufacturing a video long-playing record in which a glass mother provided with an information pattern etched in a surface oxide layer of $SiO_x$ is obtained by a process involving coating with resist, selective exposure using a laser beam modulated in accordance with the information, development of the exposed resist layer, etching of the oxide layer and removal of the remaining photoresist portions.

The article entitled "Ten billion bits on a disk" in IEEE Spectrum August 1979 pages 26 to 33 discloses pregrooving of a recording disk by forming a continuous-spiral groove which is used as an aid to tracking of an optical recording head during both reading and recording. The pregrooved disk is made using an unspecified replication technique from a master disk. Data recording in the grooves is effected by melting holes in a recording layer.

Prepublished PCT application WO 83/00460 discloses a process for making a radiation-reflecting record carrier, such as a video disc on which video and/or audio information is stored in an optically readable track of alternate reflective and non-reflective areas. Replication from a master or sub-master having the information-recorded track as apertures in a reflective film is effected photographically by using the master or sub-master as a photo mask for exposing a photoresist layer formed on a reflective coating deposited on a substrate. The portions of the photoresist layer exposed to UV light through the apertures in the perforated layer of the mask are removed and the corresponding portions of the reflective layer thereby exposed are chemically etched away. Remaining portions of the resist layer are then stripped to expose the non-etched portions of the reflective layer. The resulting apertured reflective layer carries recorded information which replicates that on the master.

According to one aspect of the present invention there is provided a method for manufacturing an optical memory element of the type having a substrate formed with a guide groove pattern and supported on said substrate a recording medium layer in which information can be recorded, and from which the recorded information can be read by a reading operation using the guide groove pattern to control the position of an optical beam projected onto the memory element, characterised in that said substrate is a glass substrate, and said guide groove pattern is formed by forming a corresponding guide groove pattern latent image in a photoresist film disposed on the substrate and developing said guide groove pattern latent image, etching the glass substrate through the developed guide groove pattern in the photoresist film, and removing remaining portions of the photoresist film, and in that said recording medium layer is deposited after the formation of said guide groove pattern in the glass substrate.

According to another aspect of the present invention there is provided a method for manufacturing an optical memory element of the type having a substrate formed with a guide groove pattern and supported on said substrate a recording medium layer in which information can be recorded, and from which the recorded information can be read by a reading operation using the guide groove pattern to control the position of an optical beam projected onto the memory element, characterised in that said substrate comprises a glass support layer and a layer of an etchable material formed on the glass support layer, and said guide groove pattern is formed by forming a corresponding guide groove pattern latent image in a photoresist film disposed on the substrate and developing said guide groove pattern latent image, etching the layer of etchable material through the developed guide groove pattern in the photoresist film down to a depth less than the full thickness of said layer of etchable material, and removing remaining portions of the photoresist film, and in that said recording medium layer is deposited after the formation of said guide groove pattern in the layer of etchable material.

The present invention will be better understood from the detailed description given hereinbelow and the accompanying drawings which are given by way of illustration only, and thus are not limitative of the present invention and wherein:

FIGURE 1 is a perspective view of an essential part of an optical memory element of the add-on-memory type or the erasable memory type;

FIGURE 2 is a sectional view showing a manufacturing step of an example of a known method for manufacturing the optical memory element;

FIGURE 3 is a sectional view showing a manufacturing step of another example of a known method for manufacturing the optical memory element;

FIGURES 4(A) through 4(E) are sectional views for explaining manufacturing steps of an embodiment of a method of the present invention;

FIGURES 5(A) and 5(B) are sectional views of examples of a groove formed by the method of FIGURES 4(A) through 4(E);

FIGURE 6 is a graph showing the groove condition formed by the method of FIGURES 4(A) through 4(E), when the etching condition is changed;

FIGURE 7 is a sectional view of an optical memory element formed by the method of FIGURES 4(A) through 4(E);

Figure 8 is a sectional view for explaining a step of still another embodiment of a method of the present invention; and

Figure 9 is a sectional view of an optical memory element formed by the method of Figure 8.

## DESCRIPTION OF THE PREFERRED EMBODIMENTS

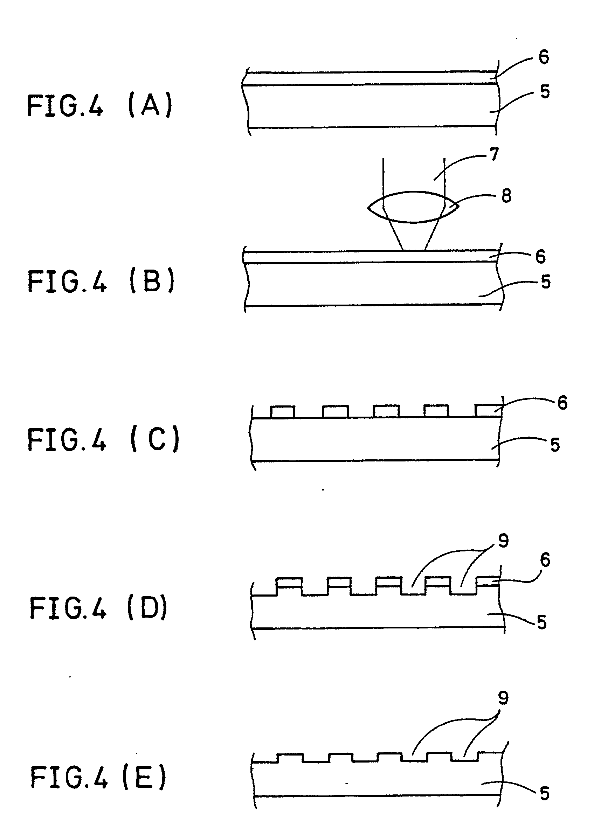

Figures 4(A) through 4(E) show steps for forming stripe-shaped grooves in the glass substrate in an embodiment of the present invention.

### STEP 1

A glass substrate 5 is used as a substrate of an optical memory element because the glass substrate does not pass oxygen and moisture therethrough. The glass substrate 5 is coated with a resist film 6 (Figure 4(A)).

### STEP 2

An argon (Ar) laser beam 7 is applied to the resist film 6 disposed on the glass substrate 5, via an objective lens 8, so as to describe lines having a desired width corresponding to the guide groove shown in FIGURE 1. In a preferred form, the described line has an intermittent configuration to show the address information. (FIGURE 4(B))

### STEP 3

Developing operation is conducted to the resist film 6 which has the described lines. Stripe-shaped grooves are formed in the resist film 6 (FIGURE 4-(C)).

### STEP 4

Sputtering operation (reactive ion etching) is conducted to the glass substrate 5 coated by the developed resist film 6 within the etching gas, for example, $CF_4$ or $CHF_3$. Stripe-shaped grooves 9 are formed in the glass substrate 5 (FIGURE 4(D)).

STEP 5

The developed resist film 6 is removed from the glass substrate 5 through the use of solvent such as acetone, or by means of sputtering in the $O_2$ atmosphere. In this way, stripe-shaped grooves 9 are formed in the glass substrate 5 (FIGURE 4-(E)).

In the embodiment of FIGURES 4(A) through 4-(E), the argon (Ar) laser beam 7 is employed to form the latent guide pattern in the resist film 6 at the step 2. Instead, a photo-mask carrying the guide groove pattern can be employed. In this case, ultraviolet rays are uniformly applied to the resist film 6 via the photo-mask, thereby forming the latent guide pattern in the resist film 6.

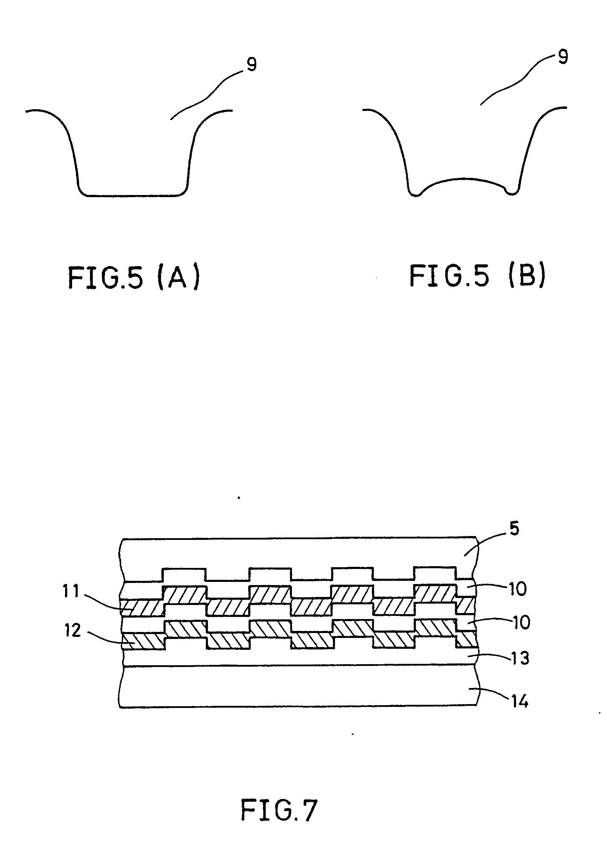

FIGURES 5(A) and 5(B) show the sectional configurations of the stripe-shaped grooves 9 when the condition of the reactive ion etching (step 4) is changed. The sectional configurations are measured by the taly step. FIGURE 5(A) shows an example wherein the bottom of the groove 9 has a flat surface. The depth of the groove 9 is $500.10^{-10}$ m (500 Å), and the width of the groove 9 is 1 $\mu$m. FIGURE 5(B) shows another example wherein the bottom of the groove 9 has a curved surface. Optical memory elements having the grooves shown in FIGURE 5(A) and FIGURE 5(B) were formed to compare the characteristics. The data reading operation was conducted while using the grooves as the guide tracks, and the noises of the reproduced signal were measured while conducting the servo operation. The optical memory element having the grooves shown in FIGURE 5(A) developed an output signal of which the noise component is lower than that of the output signal developed from the optical memory element having the grooves shown in FIGURE 5(B) by 2 to 3 dB. That is, higher reliability is ensured if the groove 9 has the flat bottom surface. The etching condition for forming the groove 9 shown in FIGURE 5(A) has a lower etching gas pressure and a higher self-bias of the sputter electrode as compared with the etching condition for forming the groove shown in FIGURE 5(B).

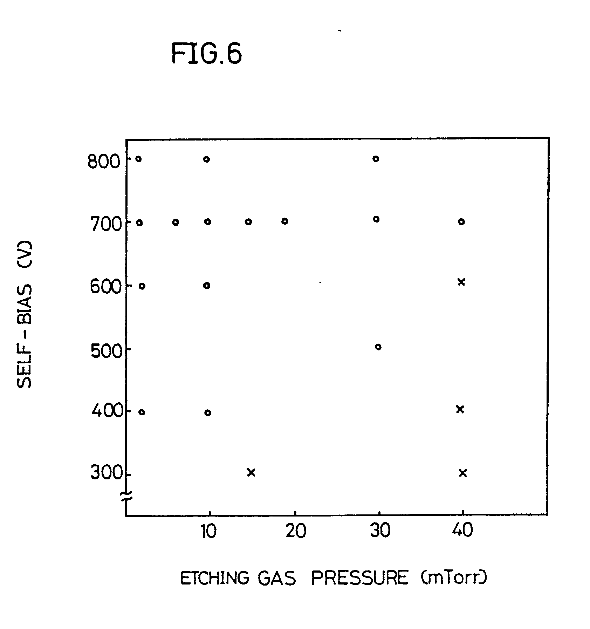

FIGURE 6 shows the groove condition when the etching condition is changed. The points marked by the symbol " " represent the condition at which the groove having the flat bottom surface is formed, and the points marked by the symbol " x " represent the condition at which the groove having the curved bottom surface is formed. It will be clear from FIGURE 6 that a desirable groove having the flat bottom surface is formed when the etching gas pressure is selected lower than about $4 Nm^{-2}$ (30 mTorr) and the self-bias of the sputter electrode is selected higher than 400 V at the reactive etching step.

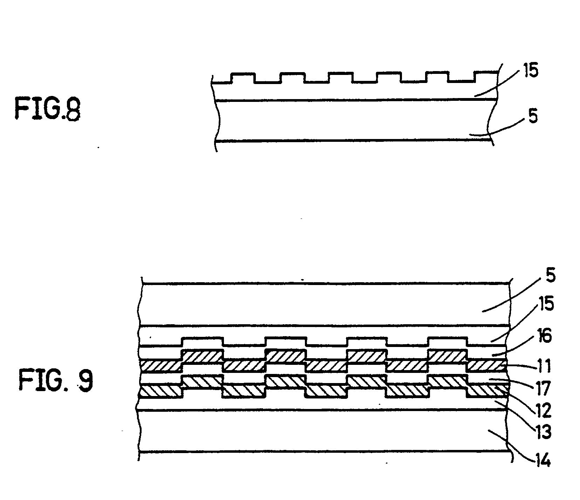

FIGURE 7 shows an example of an optical memory element which has the above-mentioned desired groove formed by the method of FIGURES 4(A) through 4(E). The glass substrate 5 has the stripe-shaped grooves formed under the above-mentioned desired etching condition. A dielectric layer 10 made of a nitride film such as an AlN film or a $Si_3N_4$ film is disposed on the glass substrate 5. A recording medium layer 11 made of a thin-film of alloy including rare earth elements and transition metals, for example, GdNdFe, GdTbFe or GdCo is formed on the dielectric layer 10. Another dielectric layer 10 is disposed on the recording medium layer 11 so that the recording medium layer 11 is sandwiched between a pair of dielectric layers 10. A reflection film 12 made of, for example, an aluminum film or a stainless steel film is disposed on the last mentioned dielectric layer 10. The dielectric layers 10 and the reflection film 12 function, in combination, to enhance the magneto-optical effect characteristics and to prevent oxygen and moisture from reaching the recording medium layer 11. A protective plate 14 made of, for example, a glass plate or an acrylic plate is attached to the reflection film 12 via an adhesion layer 13. The protective plate 14 can be omitted when two optical memory elements are attached to each other in a manner that the rear surfaces thereof are attached to each other. In this case, the optical memory device is the both-side disc.

Although the optical memory element of FIGURE 7 employs the reflection film 12, the reflection film 12 can be omitted when the recording medium layer 11 has a sufficient thickness. Such a type is called as the optical memory element of the single layer construction. Furthermore, the present invention is applicable to the optical memory element of the add-on-memory type which includes a recording medium layer made of Te, TeS or $TeO_x$.

FIGURE 8 shows stripe-shaped grooves formed by still another embodiment of the present invention. The $SiO_2$ layer 15 has a sufficient thickness, and the sputter-etching operation is terminated when the bottom of the groove reaches the middle portion of the entire thickness of the $SiO_2$ layer 15. Since the entire surface of the glass substrate 5 is covered by the $SiO_2$ layer 15, the metal material included in the glass substrate 5 such as alkali metal, for example, natrium will never elute on the surface of the substrate. Thus, the recording medium layer will not be deteriorated by the metal material eluted from the glass substrate 5.

In the embodiment of FIGURES 8, the $SiO_2$ film 15 (or $SiO_x$ film) is formed on the glass substrate 5, and the stripe-shaped grooves are formed in the $SiO_2$ film 15. However, instead of the $SiO_2$ film ($SiO_x$ film), another dielectric film, for example, a $Si_3N_4$ film, an AlN film, or a MgF film can be used, or a laminated layer of these dielectric films can be used.

FIGURE 9 shows an example of an optical memory element which includes the stripe-shaped grooves formed by the method of FIGURE 8. The $SiO_2$ film 15 is formed on the glass substrate 5. The stripe-shaped grooves are formed in the $SiO_2$ film 15 (the grooves function as the guide tracks). A dielectric layer 16 having the index of refraction higher than that of the $SiO_2$ film 15 is formed on the $SiO_2$ film 15. The dielectric layer 16 is preferably made of an AlN film or a SiO film, and preferably has a thickness of about $500.10^{-10}$m to $1000.10^{-10}$m (500 Å to 1000 Å). The recording medium layer 11 made of a thin-film of alloy including rare earth elements and transition metals, for example, GdTbFe, TbFe or GdCoFe is formed on the dielectric layer 16. The recording medium layer 11 has a thickness about $50.10^{-10}$m to 400 $10^{-10}$m (50Å to 400 Å). The minimum thickness of the recording medium layer 11 is determined by the minimum requirement for ensuring the formation of the perpendicular magnetization film. The maximum thickness of the recording medium layer 11 is determined by the limit thickness for ensuring stable operation related to the magneto-optical effects. Thus, the preferred thickness of the recording medium layer 11 varies depending on the condition for manufacturing the recording medium layer 11. When the recording medium layer 11 is formed by the sputtering method, the perpendicular magnetization film is difficult to obtain if the film thickness is less than $50.10^{-10}$m (50 Å). Another dielectric layer 17 made of, for example, an AlN film or a $SiO_2$ film is formed on the recording medium layer 11. The reflection film 12 made of, for example, Cu, Al, Ni or stainless steel is disposed on the dielectric layer 17. The dielectric layer 17 and the reflection film 12 function, in combination, to enhance the magneto-optical effect characteristics and to prevent oxygen and moisture from reaching the recording medium layer 11. The protective plate 14 made of, for example, a glass plate or an acrylic plate is attached to the reflection film 12 via the adhesion layer 13.

## Claims

1. A method for manufacturing an optical memory element of the type having a substrate (3) formed with a guide groove pattern (9) and supported on said substrate a recording medium layer (11) in which information can be recorded, and from which the recorded information can be read by a reading operation using the guide groove pattern to control the position of an optical beam projected onto the memory element, characterised in that said substrate is a glass substrate (5), and said guide groove pattern is formed by forming a corresponding guide groove pattern latent image in a photoresist film (6) disposed on the substrate and developing said guide groove pattern latent image, etching the glass substrate through the developed guide groove pattern in the photoresist film, and removing remaining portions of the photoresist film, and in that said recording medium layer (11) is deposited after the formation of said guide groove pattern (9) in the glass substrate.

2. A method for manufacturing an optical memory element of the type having a substrate (5, 15) formed with a guide groove pattern (9) and supported on said substrate a recording medium layer (11) in which information can be recorded, and from which the recorded information can be read by a reading operation using the guide groove pattern to control the position of an optical beam projected onto the memory element, characterised in that said substrate comprises a glass support layer (5) and a layer (15) of an etchable dielectric material formed on the glass support layer, and said guide groove pattern is formed by forming a corresponding guide groove pattern latent image in a photoresist film (6) disposed on the substrate and developing said guide groove pattern latent image, etching the layer (15) of etchable dielectric material through the developed guide groove pattern in the photoresist film down to a depth less than the full thickness of said layer of etchable dielectric material, and removing remaining portions of the photoresist film, and in that said recording medium layer (11) is deposited after the formation of said guide groove pattern (9) in the layer of etchable dielectric material.

3. A method according to claim 2 wherein said layer (15) of etchable dielectric material comprises at least one of $SiO_x$, $Si_3N_4$, AlN and MgF.

4. A method according to claim 1 formed with a guide groove pattern (9) and supported on said substrate a recording medium layer (11) wherein a first dielectric layer (10) is deposited on the grooved substrate (5) before the depositing of the recording medium layer (11).

5. A method according to claim 2 or claim 3 wherein a first dielectric layer (16) is deposited on the grooved layer (15) before the depositing of the recording medium layer (11).

6. A method according to claim 4 or claim 5 wherein after said recording layer (11) is deposited on said first dielectric layer (10; 16) a second dielectric layer (10; 17) is deposited on said recording medium layer (11).

7. A method according to claim 6 wherein said first and second dielectric layers are each made of AlN, or $Si_3 N_4$.

8. A method according to claim 7 when dependent on claim 3 wherein said first dielectric layer (16) has a refractive index higher than that of the layer (15) of etchable material.

9. A method according to claim 8, wherein said layer (15) of etchable material in which the groove is formed is made of $SiO_2$, and said first dielectric layer (16) is made of AlN or SiO.

10. A method according to claim 9 wherein said second dielectric layer (17) is made of AlN or $SiO_2$.

11. A method according to any of claims 6 to 10, wherein a reflective layer (12) is deposited on said second dielectric layer (17).

12. A method according to claim 11, wherein said reflective layer (12) is made of Cu, Al, Ni or stainless steel.

13. A method according to any of claims 6 to 12, wherein a protective plate (14) is attached to the optical memory element on the side remote from the substrate (5, 15).

14. A method for manufacturing an optical memory device in which a pair of optical memory elements, each made by a method according to any of claims 6 to 13 are attached to each other by their surfaces which are remote from their substrates.

15. A method according to any preceding claim, wherein said guide groove pattern is formed in said photoresist film (6) using a laser beam (7).

16. A method according to any of claims 1 to 14, wherein said guide groove pattern is formed in said photoresist film by illumination through a patterned photomask.

17. A method according to any preceding claim, wherein the etching operation is a reactive ion etching operation conducted under the condition of:

an etching gas pressure lower than 30 mTorr; and

a self-bias of the sputter electrode greater than 400 V.

18. A method according to any preceding claim, wherein said recording medium layer is a thin-film of a rare earth element transition metal alloy.

19. A method according to claim 18, wherein said alloy is GdNdFe.

20. A method according to claim 18, wherein said alloy is GdTbFe.

21. A method according to claim 18, wherein said alloy is GdCo.

22. A method according to claim 18 wherein said alloy is TbFe.

23. A method according to claim 18 wherein said alloy is GdCoFe.

24. A method according to any of claims 1 to 17 wherein said memory element is of the add-on-memory type.

25. A method according to claim 24 wherein said recording medium layer is made of Te, TeS or $TeO_x$.

26. An optical memory element or device which has been manufactured by a method according to any preceding claim.

**Revendications**

1. Un procédé de fabrication d'un élément optique de mémoire du type comportant un substrat (3) sur lequel est formée une configuration (9) de rainures de guidage et, supportée sur ledit substrat, une couche (11) de milieu d'enregistrement dans laquelle l'information peut être enregistrée et à partir de laquelle l'information enregistrée peut être lue par une opération de lecture en utilisant la configuration de rainures de guidage pour commander la position d'un faisceau optique projeté sur l'élément de mémoire, caractérisé en ce que ledit substrat est un substrat en verre (5) et en ce que ladite configuration de rainures de guidage est réalisée en formant une image latente correspondante de configuration de rainures de guidage dans une pellicule (6) de résine photosensible disposée sur le substrat et en développant ladite image latente de configuration de rainures de guidage, en gravant le substrat de verre à travers la configuration de rainures de guidage développée dans la pellicule de résine photosensible, et en enlevant les parties restantes de la pellicule de résine photosensible, et en ce que ladite couche (11) de milieu d'enregistrement est déposée après la formation de ladite configuration (9) de rainures de guidage dans le substrat en verre.

2. Un procédé de fabrication d'un élément optique de mémoire du type comportant un substrat (5, 15) sur lequel est formée une configuration (9) de rainures de guidage et, supportée sur ledit substrat, une couche (11) de milieu d'enregistrement dans laquelle l'information peut être enregistrée et à partir de laquelle l'information enregistrée peut être lue par une opération de lecture en utilisant la configuration de rainures de guidage pour commander la position d'un faisceau optique projeté sur l'élément de mémoire, caractérisé en ce que ledit substrat comprend une couche de support (5) en verre et une couche (15) en matière diélectrique, susceptible d'être gravée, formée sur la couche de support en verre, et en ce que ladite configuration de rainures de guidage est réalisée en formant une image latente correspondante de configuration de rainures de guidage dans une pellicule (6) de résine photosensible disposée sur le substrat et en développant ladite image latente de configuration de rainures de guidage, en gravant, à travers la configuration de rainures de guidage développée dans la pellicule de résine photosensible, la couche (15) de matière diélectrique susceptible d'être gravée jusqu'à une profondeur inférieure à l'épaisseur totale de ladite couche de matière diélectrique susceptible d'être gravée, et en enlevant les parties restantes de la pellicule de résine photosensible, et en ce que ladite couche (11) de milieu d'enregistrement est déposée après la formation de ladite configuration (9) de rainures de guidage dans la couche de matière diélectrique susceptible d'être gravée.

3. Un procédé selon la revendication 2 dans lequel ladite couche (15) de matière diélectrique susceptible d'être gravée comprend au moins un élément parmi SiO$_x$, Si$_3$N$_4$, AlN et MgF.

4. Un procédé selon la revendication 1 dans lequel il est formé une configuration (9) de rainures de guidage et, supportée sur ledit substrat, une couche (11) de milieu d'enregistrement dans lequel une première couche diélectrique (10) est déposée sur le substrat rainuré (5) avant le dépôt de la couche (11) de milieu d'enregistrement.

5. Un procédé selon la revendication 2 ou la revendication 3 dans lequel une première couche diélectrique (16) est déposée sur la couche rainurée (15) avant le dépôt de la couche (11) de milieu d'enregistrement.

6. Un procédé selon la revendication 4 ou la revendication 5 dans lequel, après que ladite couche (11) d'enregistrement a été déposée sur ladite première couche diélectrique (10; 16), une deuxième couche diélectrique (10; 17) est déposée sur ladite couche (11) de milieu d'enregistrement.

7. Un procédé selon la revendication 6 dans lequel lesdites première et deuxième couches diélectriques sont constituées chacune de AlN, ou de Si$_3$N$_4$.

8. Un procédé selon la revendication 7, lorsqu'elle dépend de la revendication 3, dans lequel l'indice de réfraction de ladite première couche diélectrique (16) est supérieur à celui de la couche (15) de matière susceptible d'être gravée.

9. Un procédé selon la revendication 8 dans lequel ladite couche (15) de matière susceptible d'être gravée dans laquelle est formée la rainure est en SiO$_2$, et ladite première couche diélectrique (16) est en AlN ou SiO.

10. Un procédé selon la revendication 9 dans lequel ladite deuxième couche diélectrique (17) est en AlN ou SiO$_2$.

11. Un procédé selon l'une quelconque des revendications 6 à 10, dans lequel une couche réfléchissante (12) est déposée sur ladite deuxième couche diélectrique (17).

12. Un procédé selon la revendication 11, dans lequel ladite couche réfléchissante (12) est en Cu, en Al, en Ni ou en acier inoxydable.

13. Un procédé selon l'une quelconque des revendications 6 à 12, dans lequel une plaque protectrice (14) est attachée à l'élément optique de mémoire sur le côté distant du substrat (5, 15).

**14.** Un procédé de fabrication d'un dispositif optique de mémoire dans lequel une paire d'éléments optiques de mémoire, formés chacun par un procédé selon l'une quelconque des revendications 6 à 13, sont attachés l'un à l'autre par leurs surfaces qui sont distantes de leurs substrats.

**15.** Un procédé selon une revendication précédente quelconque, dans lequel ladite configuration de rainures de guidage est formée dans ladite pellicule (6) de résine photosensible en utilisant un faisceau laser (7).

**16.** Un procédé selon l'une quelconque des revendications 1 à 14, dans lequel ladite configuration de rainures de guidage est formée dans ladite couche de résine photosensible par un éclairement à travers un photomasque configuré.

**17.** Un procédé selon une revendication précédente quelconque, dans lequel l'opération de gravure est une opération de gravure ionique réactive conduite dans les conditions suivantes:

une pression de gaz de gravure inférieure à 30 mTorr; et

une autopolarisation de l'électrode de pulvérisation supérieure à 400 V.

**18.** Un procédé selon une revendication précédente quelconque dans lequel ladite couche de milieu d'enregistrement est une pellicule mince d'un alliage d'un métal de transition et d'un élément de terre rare .

**19.** Un procédé selon la revendication 18, dans lequel ledit alliage est GdNdFe.

**20.** Un procédé selon la revendication 18, dans lequel ledit alliage est GdTbFe.

**21.** Un procédé selon la revendication 18, dans lequel ledit alliage est GdCo.

**22.** Un procédé selon la revendication 18, dans lequel ledit alliage est TbFe.

**23.** Un procédé selon la revendication 18, dans lequel ledit alliage est GdCoFe.

**24.** Un procédé selon l'une quelconque des revendications 1 à 17 dans lequel ledit élément de mémoire est du type à mémoire additive.

**25.** Un procédé selon la revendication 24 dans lequel ladite couche de milieu d'enregistrement est en Te, TeS ou $TeO_x$.

**26.** Un élément ou dispositif optique de mémoire qui a été fabriqué selon un procédé conforme à une revendication précédente quelconque.

**Patentansprüche**

**1.** Verfahren zum Herstellen eines optischen Speicherelements des Typs mit einem Substrat (3), welches mit einem Führungsrillenmuster (9) versehen ist und wobei von dem Substrat eine Aufzeichnungsschicht (11) getragen wird, in der Information aufgezeichnet und von dem die aufgezeichnete Information durch einen Lesevorgang gelesen werden kann, welches das Führungsrillenmuster verwendet, um die Position eines optischen Strahls zu steuern, der auf das Speicherelement gerichtet wird, **dadurch gekennzeichnet,** daß das Substrat ein Glassubstrat (5) ist und daß das Führungsrillenmuster gebildet ist durch Bilden eines entsprechenden latenten Bildes eines Führungsrillenmusters in einer Schicht aus Fotoresist (6), die auf das Substrat aufgebracht wird und Entwickeln des latenten Bildes des Führungsrillenmusters, Ätzen des Glassubstrats durch das entwickelte Führungsrillenmuster in der Fotoresistschicht, und Entfernen von übrigen Teilen der Fotoresistschicht, und daß die Aufzeichnungsschicht (11) nach der Bildung des Führungsrillenmusters (9) in dem Glassubstrat aufgebracht wird.

**2.** Verfahren zum Herstellen eines optischen Speicherelements des Typs mit einem Substrat (5, 15), welches mit einem Führungsrillenmuster (9) versehen ist und wobei von dem Substrat eine Aufzeichnungsschicht (11) getragen wird, in der Information aufgezeichnet und von dem die aufgezeichnete Information durch einen Lesevorgang gelesen werden kann, welches das Führungsrillenmuster verwendet, um die Position eines optischen Strahls zu steuern, der auf das Speicherelement gerichtet wird, **dadurch gekennzeichnet** wird, daß das Substrat eine Glasträgerschicht (5) und eine Schicht (15) aus einem ätzbaren dielektrischen Material aufweist, die auf der Glasträgerschicht gebildet ist und daß das Führungsrillenmuster gebildet ist durch Bilden eines entsprechenden latenten Bildes eines Führungsrillenmusters in einer Schicht aus Fotoresist (6), die auf das Substrat aufgebracht wird und Entwickeln des latenten Bildes des Führungsrillenmusters, Ätzen der Schicht (15) aus ätzbarem dielektrischen Material durch das entwickelte Führungsrillenmuster bis zu einer Tiefe, die geringer als die volle Dicke der Schicht aus ätzbarem dielektrischen Material ist, und Entfernen des übrigen Teils der Fotoresistschicht, und daß die Aufzeichnungsschicht (11) nach der Bildung des Führungsrillenmusters (9) in der Schicht aus ätzbarem dielektrischen Material aufgebracht wird.

3. Verfahren nach Anspruch 2, wobei die Schicht (15) aus ätzbarem dielektrischen Material zumindest eines von $SiO_x$, $Si_3 N_4$, AlN und MgF aufweist.

4. Verfahren nach Anspruch 1, das mit einem Führungsrillenmuster (9) gebildet ist und wobei das Substrat eine Aufzeichnungsschicht (11) trägt, wobei eine erste dielektrische Schicht (10) auf dem Rillensubstrat (5) vor dem Aufbringen der Aufzeichnungsschicht (11) aufgebracht wird.

5. Verfahren nach Anspruch 2 oder 3, wobei eine erste dielektrische Schicht (16) auf der Rillenschicht (15) vor dem Aufbringen der Aufzeichnungsschicht (11) aufgebracht wird.

6. Verfahren nach Anspruch 4 oder 5, wobei nach dem Aufbringen der Aufzeichnungsschicht (11) auf die erste dielektrische Schicht (10; 16) eine zweite dielektrische Schicht (10; 17) auf die Aufzeichnungsschicht (11) aufgebracht wird.

7. Verfahren nach Anspruch 6, wobei die erste und zweite dielektrische Schicht jeweils aus AlN oder $Si_3 N_4$ gemacht werden.

8. Verfahren nach Anspruch 7 in Abhängigkeit von Anspruch 3, wobei die erste dielektrische Schicht (16) einen Brechungsindex hat, der höher als der der Schicht (15) aus ätzbarem Material ist.

9. Verfahren nach Anspruch 8, wobei die Schicht (15) aus ätzbarem Material, in die die Rillen eingeformt sind aus $SiO_2$ gemacht wird, und daß die erste dielektrische Schicht (16) aus AlN oder SiO gemacht wird.

10. Verfahren nach Anspruch 9, wobei die zweite dielektrische Schicht (17) aus AlN oder $SiO_2$ gemacht wird.

11. Verfahren nach einem der Ansprüche 6 bis 10, wobei die reflektierende Schicht (12) auf die zweite dielektrische Schicht (17) aufgebracht wird.

12. Verfahren nach anspruch 11, wobei die reflektierende Schicht (12) aus Cu, Al, Ni oder rostfreiem Stahl gemacht wird.

13. Verfahren nach einem der Ansprüche 6 bis 12, wobei eine Schutzplatte (14) an das optische Speicherelement an der vom Substrat (5, 15) abgewandten Seite angebracht wird.

14. Verfahren zum Herstellen einer optischen Speichereinrichtung, wobei ein Paar von optischen Speicherelementen, von denen jedes nach einem Verfahren nach einem der Ansprüche 6 bis 13 hergestellt ist, mit ihren von ihren Substraten abgewandten Flächen aneinander angebracht werden.

15. Verfahren nach einem der vorhergehenden Ansprüche, wobei das Führungsrillenmuster in der Fotoresistschicht (6) unter Verwendung eines Laserstrahls (7) hergestellt wird.

16. Verfahren nach einem der Ansprüche 1 bis 14, wobei das Führungsrillenmuster in der Fotoresistschicht durch Belichten durch eine strukturierte Fotomaske gebildet ist.

17. Verfahren nach einem der vorhergehenden Ansprüche, wobei der Ätzvorgang ein reaktives Ionenätzen ist, das unter den Bedingungen durchgeführt wird:
- bei einem Ätzgasdruck von weniger als 30 mTorr; und
- einer Eigenspannung der Sprühelektrode, die höher als 400 V ist.

18. Verfahren nach einem der vorhergehenden Ansprüche, wobei die Aufzeichnungsschicht eine seltene Erden-Übergangsmetall-Legierung ist.

19. Verfahren nach Anspruch 18, wobei die Legierung GdNdFe ist.

20. Verfahren nach Anspruch 18, wobei die Legierung GdTbFe ist.

21. Verfahren nach Anspruch 18, wobei die Legierung GdCo ist.

22. Verfahren nach Anspruch 18, wobei die Legierung TbFe ist.

23. Verfahren nach Anspruch 18, wobei die Legierung GdCoFe ist.

24. Vertahren nach einem der Ansprüche 1 bis 17, wobei das Speicherelement vom Typ Aufaddierungsspeicher ist.

25. Verfahren nach Anspruch 24, wobei die Aufzeichnungsschicht aus Te, TeS oder $TeO_x$ gemacht wird.

26. Optisches Speicherelement oder Gerät, das nach einem Verfahren gemäß einem der vorhergehenden Ansprüche hergestellt wurde.

FIG.1

PRIOR ART
FIG.2

FIG.3

PRIOR ART

FIG.4 (A)

FIG.4 (B)

FIG.4 (C)

FIG.4 (D)

FIG.4 (E)

FIG.5 (A)          FIG.5 (B)

FIG.7

# FIG.6

FIG.8

15

5

FIG. 9

5
15
16
11
17
12
13
14